# EUROPÄISCHE PATENTSCHRIFT

(11) **EP 2 315 678 B1**
(45) Veröffentlichungstag und Bekanntmachung des Hinweises auf die Patenterteilung: **25.04.2012**
(21) Anmeldenummer: 09780218.5
(22) Anmeldetag: 07.07.2009
(51) Int. Cl.: B60K 15/03, F01N 3/20

(54) **TANK ZUR BEVORRATUNG EINES FLÜSSIGEN WIRKSTOFFES**
TANK FOR STORING A LIQUID ACTIVE INGREDIENT
RÉSERVOIR DE STOCKAGE D'UN PRINCIPE ACTIF LIQUIDE

(30) Priorität: 29.08.2008 DE 102008041723
(43) Veröffentlichungstag der Anmeldung: 04.05.2011
(73) Patentinhaber: Robert Bosch GmbH, 70442 Stuttgart (DE)
(72) Erfinder: KRAUSE, Michael, 67705 Trippstadt (DE); HAEBERER, Rainer, 75015 Bretten (DE)
(86) Internationale Anmeldenummer: PCT/EP2009/058554
(87) Internationale Veröffentlichungsnummer: WO 2010/023011

(56) Entgegenhaltungen:
- WO-A2-02/27280
- DE-A1-102005 030 954
- DE-A1-102006 027 487
- DE-A1-102006 046 899
- DE-U1- 20 313 163
- DE-U1-202004 018 697

## Beschreibung

### Stand der Technik

Die Erfindung geht aus von einem Tank nach der Gattung des unabhängigen Anspruchs.

Bei Kraftwagen mit Verbrennungsmotor muss aufgrund verschärfter Abgasgesetzgebungen unter anderem der Schadstoff Stickoxid reduziert werden. Eine Methode, die zur Anwendung kommt, ist das sogenannte SCR-Verfahren, ein Verfahren der selektiven katalytischen Reduktion (engl. "selective catalytic reduction"), bei dem der Schadstoff Stickoxid unter Zuhilfenahme beispielsweise flüssigen Reduktionsmittels zu Stickstoff und Wasser reduziert wird. Das Reduktionsmittel, welches in einem Tank bevorratet wird, wird von einem vorzugsweise in Tanknähe beziehungsweise auf oder in dem Tank angeordneten Fördermodul über eine Leitung vom Tank zu einem im Bereich des Abgastrakts angeordneten Dosiermodul befördert, welches gängigerweise eine Düse zur feinverteilten Einspritzung des Reduktionsmittels in das Abgas aufweist.

Aus der DE 102006027487 ist bereits ein Tank zur Bevorratung eines solchen flüssigen Reduktionsmittels zur Verwendung in einer Anlage zur Nachbehandlung von Abgasen eines Kraftfahrzeugs, insbesondere zur selektiven katalytischen Reduktion von Stickoxiden, bekannt, bei dem beweglich gelagerte Komponenten in das oberhalb von - 11 Grad Celsius flüssige AdBlue, einer wässrigen Harnstofflösung, eintauchen. Ein weiteres Beispiel für solch einen Tank aus WO 2002/27 280 A2 bekannt.

### Offenbarung der Erfindung

Der erfindungsgemäße Tank mit den kennzeichnenden Merkmalen des unabhängigen Anspruchs hat demgegenüber den Vorteil, in einfacher Weise an Kontaktstellen von im Tank befindlichen Komponenten ein Scheuern bzw. einen Abrieb zu vermeiden, der ansonsten infolge von Schwappbewegungen des Wirkstoffs im Tank beziehungsweise bei Eisbildung im Tank erfolgen würde.

Durch die in den abhängigen Ansprüchen aufgeführten Maßnahmen sind vorteilhafte Weiterbildungen und Verbesserungen des im unabhängigen Anspruch angegebenen Tanks möglich. Besonders vorteilhaft ist die Verwendung eines Gewebeschlauchs; er ist einfach montierbar sowie hoch flexibel und somit ohne Einfluss auf eine Gesamtsteifigkeit der zu schützenden Teile. Eine axiale Lageorientierung kann problemlos erfolgen, da der Gewebeschlauch in axialer Richtung durch Befestigungspunkte der zu schützenden Leitungen und der Sauglanze automatisch fixiert ist.

Im Falle der Verwendung eines Schlauchs beziehungsweise Gewebeschlauchs aus hartem Kunststoff wird der Reibkoeffizient zu benachbarten Teilen stark herabgesetzt, wodurch effektiv Abrieb und Verschleiß vermieden werden.

Die Kombination einer weichen, flexiblen Sauglanze und eines harten Gewebeschlauchs gewährleistet einen sicheren Schutz vor Abrieb unter gleichzeitiger Beibehaltung der Flexibilität, welche bei einem einfrierenden Medium von Vorteil ist.

In vorteilhafter Weise ist eine abriebgeschützte Sauglanze mit einem Heizdraht ausgestattet, der die Sauglanze und das Eis in deren näheren Umgebung auftauen kann.

Weist der Abriebschutz Löcher auf, wie sie ein geflochtener Schlauch beziehungsweise ein Gewebeschlauch aufweisen kann, weil er nicht dicht gestrickt ist, sondern lediglich als Abstandshalter Einsatz findet, wird eine stetige thermische Verbindung eines zusammenhängenden flüssigen Bereichs des Wirkstoffs zwischen der Wandung einer mit Heizdrähten bestückten Sauglanze und benachbarten Eisbereichen durch die Löcher des Abriebschutzes hindurch gewährleistet. Somit kann die Heizdrahtwärme das Eis um die Sauglanze herum optimal auftauen. In einem solchen "flüssigen Spalt" um die Sauglanze hat darüber hinaus eine Rücklaufmenge, die wieder in den Tank zurückgeführt wird, die Chance, wieder in den direkten Bereich um die Heizung zurückzufließen. Bei einem flächigen Abstandshalter wäre eine Beheizung in dieser direkten Form nicht gegeben, der Wirkstoff würde lediglich indirekt über den Abstandshalter beheizt. Ferner wird effektiv die um die Heizung aufgetaute Menge in den Luftraum oberhalb des Eises entlüftet. Es wird in vorteilhafter Weise ein Scheuerschutz bereitgestellt, der gleichzeitig einen innigen Kontakt der Flüssigkeit mit einer im Absaugschlauch bzw. der Sauglanze integrierten Heizung sicherstellt.

Weitere Vorteile ergeben sich durch die weiteren in den weiteren abhängigen Ansprüchen und in der Beschreibung genannten Merkmale.

### Kurze Beschreibung der Zeichnungen

Ausführungsbeispiele der Erfindung sind in der Zeichnung dargestellt und in der nachfolgenden Beschreibung näher erläutert.

Es zeigen
- Figur 1: einen Tank zur Bevorratung einer wässrigen Harnstofflösung und
- Figur 2: einen inneren Teilbereich eines solchen Tanks.

### Ausführungsformen der Erfindung

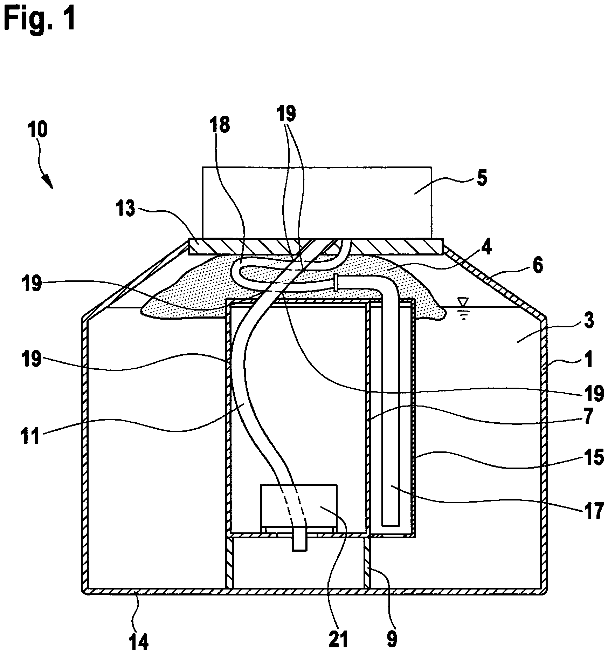

Figur 1 zeigt einen Tank 10, dessen Behälter 1 mit einer wässrigen Harnstofflösung als Reduktionsmittel 3 gefüllt ist. Dargestellt ist das Reduktionsmittel in einem gefrorenem Zustand, bei dem sich nahe eines Tankdeckels 13 ein aus gefrorenem Reduktionsmittel bestehender Aufwurf 4 gebildet hat. Im Innern des Behälters 1 ist ein sogenannter Schwapptopf 7 angeordnet. Er steht über Füße 9 auf dem Tankboden 14 und begrenzt Schwappbewegungen des flüssigen Wirkstoffs im Tank, wenn das den Tank befördernde Kraftfahrzeug in Bewegung ist. Innerhalb des Schwapptopfs ragt eine im Folgenden als Sauglanze bezeichnete Saugleitung 11 vom Tankdeckel 13 in das Tankinnere bis in einen Bereich nahe des Tankbodens 14. Die Sauglanze ist flexibel beziehungsweise biegbar und besitzt eine Überlänge, das heißt, sie weist eine Krümmung auf und liegt definiert im Bereich einer Kontaktstelle 19 an der inneren Wandung des Schwapptopfs 7 an. Auf der dem Tankboden zugewandten Seite des Schwapptopfs ragt die Sauglanze durch eine Öffnung des Schwapptopfs aus dem Schwapptopf heraus. In diesem Bereich, jedoch innerhalb des Schwapptopfs, wird die Sauglanze von einer elektrischen Heizung 21 mit nicht näher dargestellten elektrischen Versorgungleitungen umgeben, die vorzugsweise am Schwapptopf befestigt ist. Im oberen Tankbereich durchstößt die Sauglanze den Tankdeckel 13 und steht mit einem beispielsweise eine Dosierpumpe aufweisenden Fördermodul 5 in Wirkverbindung. Ein seitlich am Schwapptopf 7 angeordneter Sensorbehälter 15, der in gleicher Weise wie der Schwapptopf beziehungsweise der übrige Behälterbereich mit Wirkstoff befüllt ist, dient zum Schutz eines darin befindlichen Füllstandsmessers 17 (Füllstandssensors, engl. "level sensor") vor Eisschlag. Der Füllstandsmesser 17 ist mit einer elektrischen Leitung 18 verbunden, die zum Fördermodul 5 führt. Die elektrische Leitung 18 weist analog zur Sauglanze 11 eine Überlänge auf, das heisst, sie verläuft schlaufenförmig im oberen Bereich des Tanks nahe des Tankdeckels, bevor sie durch den Tankdeckel hindurch in das Fördermodul eintritt. Es lässt sich ohne vertretbaren Aufwand nicht vermeiden, dass sich die elektrische Leitung 18 und die Sauglanze 11 an einer oder mehreren Kontaktstellen 19 berühren.

Das Reduktionsmittel, das unterhalb -11°C gefriert, erfährt beim Phasenübergang flüssig/fest eine Volumenvergrößerung um ca 10%. Gefriert der Tank ausgehend vom Tankboden, so wird sich der Volumenzuwachs des Reduktionsmittels an der Oberfläche einstellen. Aufgrund dieser Tatsache kann das Eis einen nicht vernachlässigbaren Druck auf die Tankoberschale 6 bzw. auf den Tankdeckel 13 ausüben. Die Tankoberschale wird dementsprechend eine vertikale Verformung erfahren. Im Tank befinden sich verschiedene Komponenten (Heizung 21, Füllstandsmesser 17, Sauglanze 11), die über den separaten Deckel 13 aus der Oberschale 6 des Tanks herausgeführt werden. Aufgrund der zuvor geschilderten Eisdruckproblematik und aus Montagegründen sind die Zuleitungen für die Komponenten und die Sauglanze mit entsprechend bereits beschriebener Überlänge ausgeführt. Diese Überlänge nimmt im komplett montierten Tank eine definierte gekrümmte Lage ein. Aufgrund dieser Krümmung kann eine mögliche vertikale Ausdehnung der Tankoberschale ohne Schädigung der Komponenten aufgenommen werden. Die Sauglanze 11 verläuft in dem Schwapptopf 7 und legt sich nach der Montage des Deckels in den Tank in einem vorgegebenen Bogen an die Wand des Schwapptopfes an. Ebenso werden sich die nicht näher dargestellten elektrischen Zuleitungen der Heizung, die elektrische Zuleitung 18 des Füllstandsmessers und die elektrische Zuleiutng eines nicht näher dargestellten Temperatursensors in zuvor definierte Positionen an benachbarte Bauteile im Behälterinnern anlegen. Im Falle der Sauglanze, die an der Schwalltopfwandung anliegt, kann es aufgrund der auftretenden Beschleunigungen (z. B. auf einer Schlechtwegstrecke) im Bereich der Kontaktstelle Sauglanze/Schwalltopfwandung zu Abrieb kommen. Ebenso kann es an den elektrischen Leitungen infolge Kontakt zu anderen Komponenten zum Scheuern und somit zum Abrieb kommen. Dies umso mehr, wenn die Sauglanze und die Leitungen beispielsweise eine Elastomerummantelung haben, die im Kontaktbereich zu verstärktem Abrieb neigt.

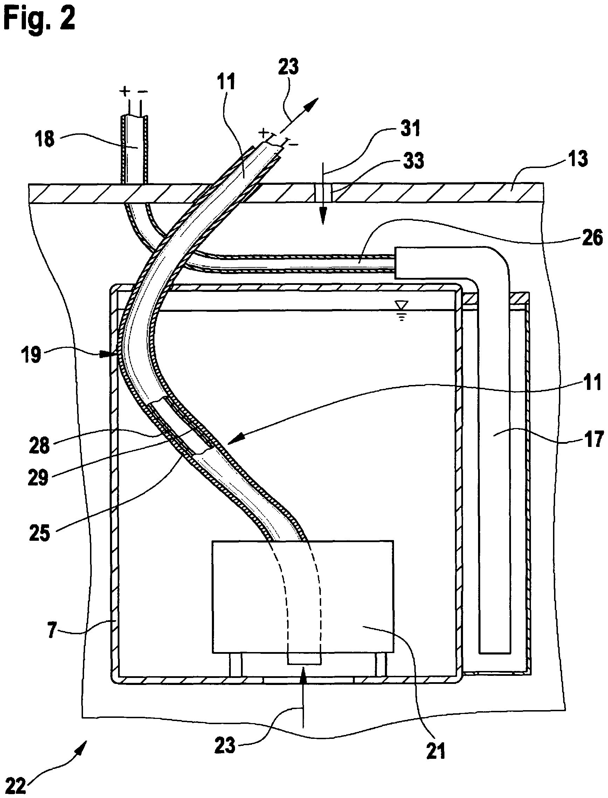

Figur 2 zeigt einen Ausschnitt 22 eines Tanks gemäß Figur 1. Gleiche Bestandteile wie in Figur 1 dargestellt sind mit gleichem Bezugszeichen versehen und werden nicht nochmals beschrieben. Der Pfeil 23 am dem Tankboden zugewandten Bereich der Sauglanze 11 stellt die Ansaugrichtung dar, in der der Wirkstoff 3 angesaugt und über das Fördermodul 5 zu einer Dosierstelle beziehungsweise einem Dosiermodul transportiert wird. Der Tankdeckel 13 weist eine Durchführung 33 für einen mit einem Pfeil 31 symbolisierten Rücklauf des flüssigen Wirkstoffs auf. Die elektrische Leitung 18 des Füllstandsmessers 17 ist mit einem geflochtenen Schutzschlauch bzw. mit einem Gewebeschlauch 26 überzogen. Auch die Sauglanze 11 ist zumindest in einem Bereich um die zu erwartende Kontaktstelle 19 herum mit einem gleichen oder ähnlichen Gewebschlauch 25 überzogen. In dieser Detaildarstellung des Tanks abgebildete, zur Heizung 21 führende Heizdrähte 28 und 29 sind innerhalb der Sauglanze oder auf der Außenwandung der Sauglanze angeordnet, jedenfalls sind sowohl Sauglanze wie Heizdrähte vom Gewebeschlauch 25 umgeben.

Die vorliegende Erfindung zeigt, wie an den zuvor beschriebenen Kontaktstellen 19 ein Scheuern bzw. Abrieb vermieden werden kann. Im Grunde genommen werden Abstandshalter eingeführt. Es werden die vom Abrieb betroffenen Leitungen und Saugschläuche mit einem in der Elektrotechnik üblichen geflochtenen Gewebeschlauch überzogen. Dieser aus vielen Kunststofffäden geflochtene Gewebeschlauch, eng anliegend am zu schützenden Teil, übernimmt dabei die Funktion des Abstandhalters.

## Patentansprüche

1. Tank (10) zur Bevorratung eines flüssigen Wirkstoffs (3) zum Betrieb eines Aggregats eines Kraftfahrzeugs, insbesondere einer Anlage zur Nachbehandlung von Abgasen des Kraftfahrzeugs, mit einem Behälter (1) und mindestens einem in den Behälter ragenden Funktionselement (11, 28, 29; 18) zur Beeinflussung und/oder Messung einer physikalischen Größe des Wirkstoffs (3), insbesondere des Füllstands und/oder der Temperatur, wobei das Funktionselement (11, 28, 29; 18) mit mindestens einem Mittel (25, 26) zum Schutz vor Abrieb im Falle eines mechanischen Kontaktes (19) mit einer benachbarten Tankkomponente (7, 11) versehen ist, **dadurch gekennzeichnet, dass** das Funktionselement flexibel und/oder biegbar ist und sich an die Tankkomponente anlegt.

2. Tank nach Anspruch 1, **dadurch gekennzeichnet, dass** das Funktionselement (11, 28, 29; 18) derart angeordnet ist, dass es im Falle einer Befüllung des Behälters mit dem Wirkstoff zumindest teilweise mit dem Wirkstoff in Berührung kommen kann.

3. Tank nach Anspruch 1 oder 2, **dadurch gekennzeichnet, dass** das mindestens eine Mittel (25, 26) durch einen Abstandshalter gebildet ist.

4. Tank nach einem der vorhergehenden Ansprüche, **dadurch gekennzeichnet, dass** das mindestens eine Mittel ein Schlauch ist.

5. Tank nach Anspruch 4, **dadurch gekennzeichnet dass** der Schlauch mindestens ein Loch aufweist, so dass der Wirkstoff bis zu einer Außenwandung des Funktionselements gelangen kann, welches durch den Schlauch von der benachbarten Tankkomponente (7, 11) beabstandet gehalten wird.

6. Tank nach Anspruch 4 oder 5, **dadurch gekennzeichnet, dass** der Schlauch ein Gewebeschlauch ist.

7. Tank nach einem der vorhergehenden Ansprüche, **dadurch gekennzeichnet, dass** der Abstandshalter aus hartem Kunststoff besteht.

8. Tank nach einem der vorhergehenden Ansprüche, **dadurch gekennzeichnet, dass** das mindestens eine Funktionselement eine Saugleitung, insbesondere eine flexible Saugleitung, aufweist.

9. Tank nach einem der vorhergehenden Ansprüche, **dadurch gekennzeichnet, dass** das mindestens eine Funktionselement eine elektrische Leitung aufweist.

10. Tank nach Anspruch 9, **dadurch gekennzeichnet, dass** die elektrische Leitung von einem äußeren Bereich des Behälters zu einer elektrischen Heizung und/oder zu einem Meßelement, insbesondere einem Füllstandmesser (17), führt.

11. Tank nach Anspruch 9, **dadurch gekennzeichnet, dass** die elektrische Leitung die elektrische Heizung bildet.

12. Tank nach einem der vorhergehenden Ansprüche, **dadurch gekennzeichnet, dass** die benachbarte Tankkomponente durch einen im Behälter (1) angeordneten Schwapptopf (7) gebildet ist, wobei der Schwapptopf (7) zur Begrenzung der Bewegung des Wirkstoffs (3) in Folge einer Bewegung des Kraftfahrzeugs vorgesehen ist.

## Claims

1. Tank (10) for storing a liquid active ingredient (3) for operating a motor vehicle unit, in particular a system for the aftertreatment of exhaust gases of the motor vehicle, with a container (1) and at least one functional element (11, 28, 29; 18), which projects into the container, for influencing and/or measuring a physical variable of the active ingredient (3), in particular the level and/or the temperature, wherein the functional element (11, 28, 29; 18) is provided with at least one means (25, 26) for protecting against abrasion in the event of mechanical contact (19) with an adjacent tank component (7, 11), **characterized in that** the functional element is flexible and/or bendable and is placed onto the tank component.

2. Tank according to Claim 1, **characterized in that** the functional element (11, 28, 29; 18) is arranged in such a manner that it can come at least partially into contact with the active ingredient during filling of the container with the active ingredient.

3. Tank according to Claim 1 or 2, **characterized in that** the at least one means (25, 26) is formed by a spacer.

4. Tank according to one of the preceding claims, **characterized in that** the at least one means is a hose.

5. Tank according to Claim 4, **characterized in that** the hose has at least one hole, and therefore the active ingredient can pass as far as an outer wall of the functional element which is kept spaced apart from the adjacent tank component (7, 11) by the hose.

6. Tank according to Claim 4 or 5, **characterized in that** the hose is a fabric hose.

7. Tank according to one of the preceding claims, **characterized in that** the spacer is composed of hard plastic.

8. Tank according to one of the preceding claims, **characterized in that** the at least one functional element has a suction line, in particular a flexible suction line.

9. Tank according to one of the preceding claims, **characterized in that** the at least one functional element has an electric line.

10. Tank according to Claim 9, **characterized in that** the electric line leads from an outer region of the container to an electric heater and/or to a measuring element, in particular a level sensor (17).

11. Tank according to Claim 9, **characterized in that** the electric line forms the electric heater.

12. Tank according to one of the preceding claims, **characterized in that** the adjacent tank component is formed by a slosh pot (7) arranged in the container (1), the slosh pot (7) being provided to limit the movement of the active ingredient (3) as a consequence of a movement of the motor vehicle.

## Revendications

1. Réservoir (10) pour le stockage d'un ingrédient actif liquide (3) pour le fonctionnement d'un groupe dans un véhicule automobile, en particulier une installation pour le post-traitement des gaz d'échappement du véhicule automobile, comprenant un récipient (1) et au moins un élément fonctionnel (11, 28, 29 ; 18) pénétrant dans le récipient pour influencer et/ou mesurer une grandeur physique de l'ingrédient actif (3), en particulier le niveau de remplissage et/ou la température, l'élément fonctionnel (11, 28, 29 ; 18) étant muni d'au moins un moyen (25, 26) pour la protection contre l'usure dans le cas d'un contact mécanique (19) avec un composant adjacent du réservoir (7, 11), **caractérisé en ce que** l'élément fonctionnel est flexible et/ou souple et s'applique contre le composant du réservoir.

2. Réservoir selon la revendication 1, **caractérisé en ce que** l'élément fonctionnel (11, 28, 29 ; 18) est disposé de telle sorte qu'il puisse venir en contact au moins en partie avec l'ingrédient actif dans le cas d'un remplissage du récipient avec l'ingrédient actif.

3. Réservoir selon la revendication 1 ou 2, **caractérisé en ce que** l'au moins un moyen (25, 26) est formé par un élément d'espacement.

4. Réservoir selon l'une quelconque des revendications précédentes, **caractérisé en ce que** l'au moins un moyen est un tuyau flexible.

5. Réservoir selon la revendication 4, **caractérisé en ce que** le tuyau flexible présente au moins un trou, de sorte que l'ingrédient actif puisse parvenir jusqu'à une paroi extérieure de l'élément fonctionnel qui est maintenu espacé du composant adjacent du réservoir (7, 11) par le tuyau flexible.

6. Réservoir selon la revendication 4 ou 5, **caractérisé en ce que** le tuyau flexible est un tuyau en textile.

7. Réservoir selon l'une quelconque des revendications précédentes, **caractérisé en ce que** l'élément d'espacement se compose de plastique dur.

8. Réservoir selon l'une quelconque des revendications précédentes, **caractérisé en ce que** l'au moins un élément fonctionnel présente une conduite d'aspiration, notamment une conduite d'aspiration flexible.

9. Réservoir selon l'une quelconque des revendications précédentes, **caractérisé en ce que** l'au moins un élément fonctionnel présente une conduite électrique.

10. Réservoir selon la revendication 9, **caractérisé en ce que** la conduite électrique conduit depuis une région extérieure du récipient à un chauffage électrique et/ou à un élément de mesure, notamment un dispositif de mesure de niveau de remplissage (17).

11. Réservoir selon la revendication 9, **caractérisé en ce que** la conduite électrique constitue le chauffage électrique.

12. Réservoir selon l'une quelconque des revendications précédentes, **caractérisé en ce que** le composant adjacent du réservoir est formé par un pot anticlapotis (7) disposé dans le récipient (1), le pot anticlapotis (7) étant prévu pour limiter le mouvement de l'ingrédient actif (3) suite à un mouvement du véhicule automobile.
